# EUROPEAN PATENT SPECIFICATION

(11) **EP 4 234 192 B1**
(45) Date of publication and mention of the grant of the patent: **26.03.2025**
(21) Application number: 22158746.2
(22) Date of filing: 25.02.2022
(51) Int. Cl.: B29B 11/16, B29C 70/42, B29D 99/00

(54) **METHOD FOR MANUFACTURING WIND TURBINE BLADE PREFORMS WITH COMPLEX GEOMETRIES**
VERFAHREN ZUR HERSTELLUNG VON TURBINENSCHAUFELVORFORMEN MIT KOMPLEXEN GEOMETRIEN
PROCÉDÉ DE FABRICATION DE PRÉFORMES DE PALES D'ÉOLIENNES À GÉOMÉTRIES COMPLEXES

(43) Date of publication of application: 30.08.2023
(73) Proprietor: LM Wind Power A/S, 6000 Kolding (DK)
(72) Inventor: MADSEN, Kristian, Lehmann, 6000 Kolding (DK)
(74) Representative: COPA Copenhagen Patents

(56) References cited:
- WO-A1-2014/191046
- WO-A1-2021/214314
- US-A1- 2016 312 762
- US-A1- 2019 070 801

## Description

### Field of the invention

The present invention relates to a method of manufacturing a preform for a wind turbine blade, to a mould assembly, and to a method of manufacturing a shell part of a wind turbine blade.

### Background of the invention

Climate change has created an urgent need for sustainable energy, putting the spotlight on wind power as a cost-effective and clean energy source. Wind turbines typically comprise a tower, generator, gearbox, nacelle, and one or more rotor blades, which capture kinetic energy of wind using known airfoil principles. With increasing energy demand, modern wind turbines can have power ratings of above 10 MW and may have rotor blades that exceed 100 meters in length.

Wind turbine rotor blades are typically made from a fibre-reinforced polymer material, comprising a pressure side shell half and a suction side shell half, also called blade halves. The cross-sectional profile of a typical blade includes an airfoil for creating an air flow leading to a pressure difference between both sides. The resulting lift force generates torque for producing electricity.

The shell halves of rotor blades are often manufactured using blade moulds. First, a blade gel coat or primer is applied to the mould. Subsequently, fibre reinforcement and/or fabrics are placed into the mould followed by resin infusion. A vacuum is typically used to draw epoxy resin material into a mould. Alternatively, prepreg technology can be used in which a fibre or fabric pre-impregnated with resin forms a homogenous material which can be introduced into the mould. Several other moulding techniques are known for manufacturing wind turbine blades, including compression moulding and resin transfer moulding. The shell halves are assembled by being glued or bolted together substantially along a chord plane of the blade.

In such blade manufacturing processes, the use of preforms has become increasingly important. A preform is a shaped arrangement of fibres, such as multiple layers thereof, which has been bound and/or consolidated for later use as part of the fibre lay-up in the blade mould. The rationale for using preforms for blade manufacturing is to reduce cycle time in the blade mould. In addition, using preforms may reduce the number of required repairs due to the pre-consolidated structure of the preforms. As blade lengths increase, using preforms for blade lay-up adds efficiency and precision.

Typically, multiple preforms will be used in manufacturing a wind turbine blade. This usually requires large space for manufacturing and for storing the preforms. In addition, the manufacturing of preforms of different shapes and sizes can be time-consuming and expensive. Providing moulds for manufacturing preforms can be tedious and costly, which applies even more if preforms of various shapes and curvatures are required.

In addition, a typically wind turbine blade contains various parts of complex geometry and/or materials which a different from the classic fibre laminate used for a major part of a blade shell. When using such parts in combination with fibre preforms, even more complex geometries are required, which will vary between preforms depending on their placement location in the blade mould.

From WO 2014/191046 A1 it is known to provide shell halves of a wind turbine blade with a root end insert comprising a plurality of fastening members which are embedded between outer fibre layers and inner fibre layers of the shell. These fastening members are accessible from the root end of the shell part so that the wind turbine blade may be mounted to the hub of a wind turbine. In this process, a mounting plate can be used to facilitate integration of the fastening members, wherein a plurality of bushings are provided on the mounting plate, alternating with wedge-shaped inserts. After completing the manufacturing process, the mounting plate of the root end assembly can be removed, and the remaining part constitutes a root end insert for attachment to the hub.

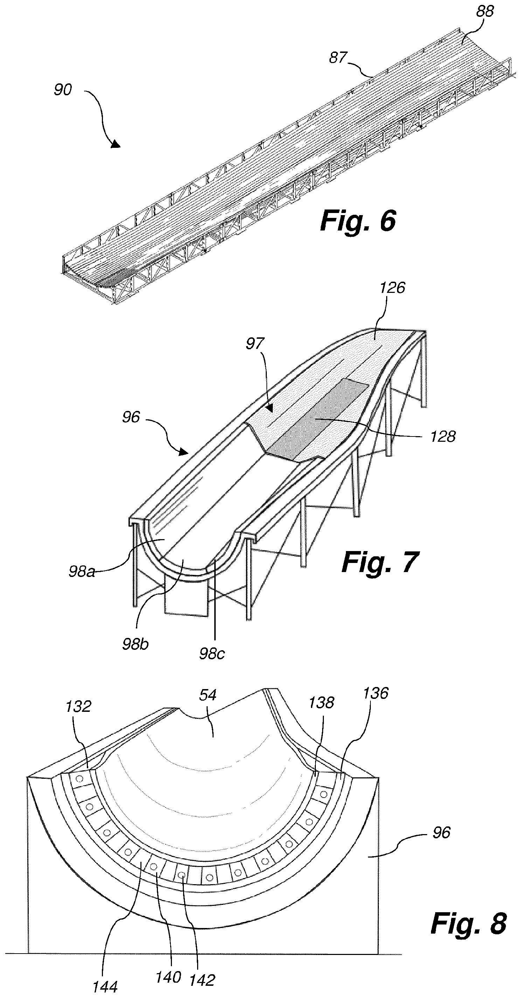

US2016/312762 A1 relates to a mould part for manufacturing at least a root section of a wind turbine blade and adapted for use via mould inlays; paragraph [0001]. FIG. 8 shows a side view of a lay-up in the mould part witha mould inlay 350 arranged on the mould surface 42 of the mould part 40; [0072]. An outer fibre skin 360 comprising a number of fibre layers is arranged on top of the mould inlay 350 and the mould surface 42. Fastening members 364 in form of bushings for fastening the blade to the hub of a wind turbine as well as possible intermediate inserts are arranged on top of the outer fibre skin 360. Finally, an inner fibre skin 362 comprising a number of fibre layers is arranged on top of the bushings 364 and the possible intermediate inserts; [0073].

When including such root end inserts and other parts, like core material in the blade mould, precise geometry control of the various required fibre preforms becomes challenging.

It is therefore a first object of the present invention to provide a more cost-efficient way of manufacturing preforms for wind turbine blade parts.

It is a further object of the present invention to provide a more flexible and simple mode of manufacturing such preforms.

It is another object of the present invention to provide an improved preform mould assembly for forming preforms having varying shapes and sizes.

It is another object of the present invention to provide an improved method of manufacturing a wind turbine blade using multiple preforms which are to be arranged at different locations within the blade mould.

### Summary of the invention

The present invention addresses one or more of the above-discussed objects by providing a method of manufacturing a preform for a wind turbine blade according to the subject-matter of the independent claim 1.

It was found that this method allows for the manufacturing of preforms which can be used in the subsequent blade manufacturing process, particularly in regions where uneven or complex geometries need to be covered with fibre material. This applies in particular to the blade root end when a root end assembly is to be inserted, or toward the chordwise centre of the shell half where typically core material is to be sandwiched between fibre layers. Thus, by using a mould inlay comprising a tapered edge, preforms can be obtained that compensate for such uneven or complex geometries at their bottom surface. This was found to substantially reduced wrinkle formation while laying preforms in the blade mould. In particular when making the mould inlay(s) a permanent part of the preform mould for a standardized manufacturing process this results in substantial reduction of manufacturing cost.

Preferably, the preform to be manufactured by the present method is a consolidated arrangement of material comprising fibres, such as glass fibres, and a binding agent. The preform will typically be used for manufacturing a blade half of a wind turbine blade, such as a suction side shell half or a pressure side shell half. The preforms can be used in a subsequent blade moulding process as part of the fibre lay-up in the blade mould, such as a blade half mould. The preforms manufactured according to the present invention can be placed within the root region of a blade mould, thus constituting part of the root laminate. The root region may correspond to a region of the blade having a substantially circular or elliptical cross-section. However, the preforms could also be used for other parts and regions of a wind turbine blade, such as trailing edge or leading edge reinforcements or adhesive flanges. Alternatively, the preforms could be used for a full blade layup, or the central load carrying laminates as the main laminate.

The preform mould used in the method of the present invention may be of a type comprising one or more support elements and a plurality of strip members arranged on the one or more support elements. Preferably, each of the strip members comprises a top surface extending between a first lateral edge and an opposing second lateral edge, a groove extending along the first lateral edge, a tongue extending along the second lateral edge, and a sealing member arranged in the groove, wherein the strip members are arranged in juxtaposition, and wherein the tongue of a strip member is fixed, preferably releasably fixed, within the groove of an adjacent strip member, preferably such that the tongue abuts the sealing member, the respective top surfaces of the strip members forming a moulding surface for moulding the preform.

In some embodiments, the mould surface of the preform mould has a length of between 15 and 30 meters. In other embodiments, the mould surface of the preform mould has a width of 2-5 meters. In some embodiments, the preform mould has a height of between 0.5 and 2 meters. The mould surface of the preform mould may have a moulding surface area of between 10 and 100 square meters, such as between 30 and 80 square meters, preferably between 50 and 70 square meters. In a preferred embodiment, the mould surface is substantially gas tight.

In some embodiments, each preform mould has a length-width ratio of at least 5:1. In other embodiments, each preform mould has a length-width ratio of at least 5:1, such as at least 10:1. In a preferred embodiment, each preform mould has a length-width ratio of at least 15:1. In some embodiments, each preform mould has a length-width ratio of up to 100:1.

In a preferred embodiment, each of the preforms obtainable by the preform mould of the present invention is configured to form a blade section starting from the root end of the wind turbine blade. Thus, preferably each of the preforms obtainable by the preform mould of the present invention is configured to be arranged at the root end of the blade mould. Most preferably, the preform obtainable using the preform mould of the present invention is configured to form a subsection of the root section extending from the root end of the blade together with other subsections of the root section equally extending from the root end of the blade.

In some embodiments, the preform moulds of the present invention comprise a mould surface configured for the manufacturing of respective subsections of a wind turbine blade, each subsection extending from the root end of the wind turbine blade. In some embodiments, the preform mould has a concave, or inwardly curved, mould surface. In a particularly preferred embodiment, the preform mould has an elongate mould surface with a length which is at least double, preferably at least five times, its width. The longitudinally extending lateral edges of the said mould surface, such as a left lateral edge and an opposing right lateral edge, extend in the length direction of the preform mould.

The step of fastening a first mould inlay to a first portion of the mould surface preferably comprises bonding the first mould inlay to the mould surface using an adhesive. The first mould inlay has an outer surface, which typically faces upward when the mould inlay is fastened to the preform mould, and an inner surface, which typically faces downward when the mould inlay is fastened to the preform mould, wherein the inner surface of the first mould inlay faces the first portion of the mould surface. It is preferred that the first portion of the mould surface extends from one of the two lengthwise ends of the preform mould surface, preferably along substantially the entire width of the mould surface, for a length of at least 5%, more preferably at least 10%, most preferably at least 20% of the length of the preform mould surface.

In a preferred embodiment, the mould surface comprises a front edge, a rear edge, and two lateral edges each extending between the front edge and the rear edge, wherein said first portion of the mould surface extends along the front edge of the mould surface. In some embodiments, the extent of the mould surface can be delimited by one or more vacuum profiles which are fastened to the mould surface, typically extending parallel to the lateral edges of the mould surface. The fibre material is then preferably arranged in between the two opposing vacuum profiles. During the subsequent step of applying negative pressure, air can be advantageously withdrawn from the mould cavity via the vacuum profiles. In some embodiments, the first mould inlay is arranged in between a first and a second vacuum profile, said vacuum profiles extending in the length direction of the preform mould, wherein preferably the first mould inlay extends over the entire width in between the vacuum profiles.

At least part of the perimeter of the first mould inlay has a tapered edge. As used herein the term "perimeter" means the circumference or outer boundary of the mould inlay, i.e. its edges which extend between the outer (top) surface and the inner (bottom) surface of the inlay. Typically, the perimeter of the mould inlay consists of four edges, at least one of which is a tapered edge. Preferably, the first and second mould inlays have a substantially cuboid shape. Preferably, the first and second mould inlays have a substantially cuboid shape with four edges, wherein at least one of the four edges is a tapered edge. In a preferred embodiment, each mould inlay is shaped as a substantially flat cuboid having a height which is not more than 10% of its length or width, with a least one tapered edge.

In the step of laying a fibre material and a binding agent on the mould surface and on the first mould inlay, the fibre material is typically placed on the outer surface (top surface) of the first mould inlay and on the surrounding mould surface. The fibre laying step will typically comprise the use of one or more fibre lay-up devices.

The fibre material and the binding agent can be preferably covered with a vacuum bag, such as a disposable vacuum bag or single-use vacuum bag for providing a vacuum chamber that allows consolidation of the fibre material of the preform. To form the moulding cavity, the periphery of the vacuum bag can be sealed to the mould, preferably by using a sealant tape, e.g. comprising a double sided adhesive, such as tacky tape.

Vacuum or negative pressure is then applied to the fibre material and binding agent, preferably via one or more vacuum profiles, for consolidating the preform.

The step of applying heat to the consolidated fibre material and binding agent to form the preform is preferably carried out using one or more heating devices, such as an oven. The heating temperature is preferably between 40 and 200 °C, such as 100-130 °C.

The binding agent can be applied to the fibre material during layup on the preform mould. In other embodiments, the binding agent is applied to the fibre material prior to the layup of the fibre material. Such binding agent is preferably present in an amount of 0.1-15 wt% relative to the weight of the fibre material. The binding agent may also be present in an amount of 10-20 gram per square meter of glass surface. In other embodiments, the binding agent may be present in an amount of 1-100 gram per square meter of glass surface.

Typically, the fibre material is placed successively onto the moulding surface together with the binding agent. The fibre material may comprise glass fibres, carbon fibres or a combination thereof. According to a preferred embodiment of the method, a glass fibre material is placed onto the mould surface, such as multiple layers of glass fibre material. The fibre material may advantageously be brought into contact with a binding agent before or during the fibre lay-up.

In another embodiment, the fibre material may include fibre rovings, such as glass fibre rovings. The lay-up process may include placing multiple single roving bundles into the mould, the roving bundles being preferably aligned unidirectionally. In a preferred embodiment, multiple layers of fibre rovings or roving bundles are successively placed onto each preform mould.

The binding agent may also be present in an amount of 5-40, preferably 10-20, gram per square meter of fibre surface. In preferred embodiments, the binding agent is present in an amount of 0.5-5 wt%, preferably 0.5-2.5 wt%, relative to the weight of the fibre material. Advantageously, the binding agent is a thermoplastic binding agent. The binding agent may comprise a polyester, preferably a bisphenolic polyester.

In a preferred embodiment, a heating step is carried out during or after applying negative pressure to the fibre material and binding agent, wherein heating of the fibre material and the binding agent takes place at a temperature of between 40 and 200 °C, preferably between 90 and 160 °C.

An example of a suitable binding agent is a polyester marketed under the name NEOXIL 940. Examples include NEOXIL 940 PMX, NEOXIL 940 KS 1 and NEOXIL 940 HF 2B, all manufactured by DSM Composite Resins AG. Another example is a polyester resin marketed under the name C.O.I.M. FILCO^{®} 661 FPG 005, which is a bisphenolic unsaturated polyester resin in powder form. Preferably, the binding agent is a polyester, preferably a bisphenolic polyester. In other embodiments, the binding agent is a hotmelt adhesive or based on a prepreg resin. In some embodiments, the preform comprises an epoxy material.

According to another embodiment, the binding agent is a thermoplastic binding agent. Typically, the fibre material comprises fibre rovings which are at least partially joined together by means of the binding agent by thermal bonding. In a preferred embodiment, the binding agent is a binding powder, such as a thermoplastic binding powder.

In one embodiment, the preforms of the present invention essentially consist of the fibre material and the binding agent. This means that the preforms contain no more than 10 wt%, preferably not more than 5 wt% or not more than 1 wt%, of material other than fibre material and binding agent relative to the total weight of the preform. According to another embodiment, the preform consists of the fibre material and the binding agent.

In another embodiment, the fibre material used for the preforms of the present invention essentially consists of glass fibres. This means that the fibre material contains not more than 10 wt%, preferably not more than 5 wt% or not more than 1 wt%, of material other than glass fibres relative to the total weight of the fibre material. According to another embodiment, the fibre material consists of glass fibres.

In one embodiment, the binding agent is present in an amount of 1-6 wt% relative to the weight of the fibre material. According to another embodiment, the melting point of the binding agent is between 40° and 220 °C, preferably between 40 and 160 °C. According to another embodiment, the binding agent comprises a polyester, preferably a bisphenolic polyester.

In one embodiment of the present invention, each preform essentially consists of the fibre material and the binding agent. According to another embodiment, the fibre material comprises fibre rovings, preferably glass fibre rovings. In other embodiments, the fibre material may comprise carbon fibres or a hybrid material. According to another embodiment, the fibre material comprises a fibre fabric, such as a fibre mat. In another embodiment, a preform may further comprise at least one fibre fabric such as a fibre mat. Fibre rovings may be arranged on top and/or below such fabric.

In a preferred embodiment, the preforms manufactured according to the afore-mentioned method are used as part of the root region of a wind turbine blade, such as the root laminate. The root region may extend up to 40 meters, such as up to 25 meters, from the root end of the blade, as seen in its longitudinal direction. In other embodiments, the root region may extend to the shoulder of the blade +/- 5 meters. However, the preforms could also be used for other parts and regions of a wind turbine blade. In other embodiments, the preforms manufactured according to the afore-mentioned method are used over a length of 10-35% of the total blade length. In another embodiment, the preforms manufactured according to the afore-mentioned method are used in a region of the blade extending between its root end and a shoulder of the blade.

In a preferred embodiment, the method further comprises fastening a second mould inlay to a second portion of the mould surface, the second portion being different from the first portion of the mould surface, the second mould inlay having an outer surface and an inner surface, wherein the inner surface of the second mould inlay faces the second portion of the mould surface, and wherein at least part of the perimeter of the second mould inlay has a tapered edge, wherein the laying step comprises laying a fibre material and a binding agent on the mould surface, on the first mould inlay, and on the second mould inlay. It is preferred that the first portion and the second portion of the mould surface constitute not more than 90% of the entire mould surface, preferably 10-80%, most preferably 30-80% of the entire mould surface.

In a preferred embodiment, the first mould inlay is spaced apart from the second mould inlay. It is particularly preferred that the first mould inlay is arranged at the first lengthwise end of the preform mould, and that the second mould inlay is arranged at the second lengthwise end of the preform mould. Preferably, the first mould inlay is arranged such that its tapered end faces towards the second mould inlay. It is also preferred that the first mould inlay extends over the width of the mould surface, whereas the second mould inlay extends over only part of the width of the mould surface.

In a preferred embodiment, the first mould inlay is spaced apart from the second mould inlay by a distance of at least 100 mm, such as at least 200 mm, as measured along the longitudinal axis of the mould surface. In a preferred embodiment, said second portion of the mould surface extends along at least part of the rear edge of the mould surface, and preferably along at least part of one of the lateral edges of the mould surface.

According to the invention, the longitudinal axis of the first mould inlay is substantially perpendicular to the longitudinal axis of the mould surface. Thus, the first mould inlay may be oriented substantially transverse to the length of the mould surface of the preform mould.

According to the invention, the longitudinal axis of the second mould inlay is substantially parallel to the longitudinal axis of the mould surface. Thus, the second mould inlay may be oriented substantially along the length of the mould surface of the preform mould.

In a preferred embodiment, the first and/or the second mould inlay are permanently fastened to the mould surface, preferably using an adhesive. In a preferred embodiment, the first and/or the second mould inlay are substantially planar or substantially plate-shaped.

In a preferred embodiment, the tapered edge of the first and/or the second mould inlay is uniformly linearly tapered, e.g. tapering from a point maximum thickness of the mould inlay linearly to a point of minimum thickness.

In a preferred embodiment, the perimeter of the first mould inlay comprises a front edge, a rear edge, and two side edges, wherein the rear edge is a tapered edge, preferably wherein the front edge and the two side edges are substantially straight edges. Similarly, in a preferred embodiment, the perimeter of the second mould inlay comprises a front edge, a rear edge, and two side edges, wherein the front edge and one of the side edges are tapered edges, preferably wherein the rear edge and the other side edge are substantially straight edges.

In some embodiments, at least a portion of the perimeter of the mould inlays has a contoured or stepped edge.

The first and/or the second mould inlay can be made of a polymer material. In a preferred embodiment, the first and/or the second mould inlay are made of a foam material, such as a polymer foam, e.g. a polyurethane foam.

In a preferred embodiment, the tapered edge of the first and/or the second mould inlay is formed as a wedge-shaped part. In a preferred embodiment, the first and/or second mould inlay has a thickness of 20-100 mm, preferably 40-60 mm, tapering to less than 2 mm at the respective tapered edge.

In another aspect, the present invention relates to a mould assembly according to the subject-matter of the independent claim 8.

In another aspect, the present invention relates to a method of manufacturing a shell part of a wind turbine blade, the method comprising the steps of
providing a blade mould comprising a moulding cavity,
arranging a first set of preforms within the moulding cavity of the blade mould,
placing a root end assembly, preferably comprising a plurality of embedded bushings arranged along a substantially semi-circular path, on top of at least part of the first set of preforms,
arranging a second set of preforms on top of the root end assembly and on top of the first set of preforms,
infusing a resin into the blade mould, and
curing or hardening the resin in order to form the blade part,
wherein the second set of preforms comprises a plurality of preforms manufactured according to the method of the present invention.

The root end assembly is preferably a substantially semi-circular arrangement comprising a plurality of embedded fastening members, preferably bushings, arranged along a substantially semi-circular path, the fastening members being arranged to receive root bolts for fixing the blade to a hub of a wind turbine blade. The root end assembly preferably comprises a wedge-shaped or tapered part at its distal end, i.e. at the end pointing towards the tip end of the blade.

In a preferred embodiment, each of the plurality of preforms comprises a top surface and an opposing bottom surface, wherein the bottom surface comprises a cavity with one or more chamfered portions. Said cavity with one or more chamfered portions is advantageously formed in the preform manufacturing method by use of the mould inlays(s) as discussed above.

In a preferred embodiment, the method further comprises the steps of placing a core material on top of at least part of the first set of preforms, and arranging the second set of preforms on top of the root end assembly, the core material and the first set of preforms. The core material may comprise balsa wood or a foam material.

In some embodiments, each bushing may be embedded in a respective root inserts surrounding the bushing. In some embodiments, spacer elements, such as spacer elements with a butterfly-shaped cross section may be arranged in between neighbouring bushings along the substantially semi-circular path.

In some embodiments, the method of manufacturing a wind turbine blade part may involve arranging preforms in a prefab mould with subsequent infusing of resin and curing for manufacturing sub parts for later blade assembly. In some embodiments, the wind turbine blade part is a root laminate, a main laminate or a part thereof. In another embodiment, the blade part is a blade half.

Typically, the resin infusion step comprises vacuum assisted resin transfer moulding. In a preferred embodiment, the resin dissolves the binding agent of the preform. Other embodiments involve chemical binding, for example for epoxy or thermoset resins.

The resin for injecting the preform during the manufacturing of wind turbine blade parts, such as a root laminate, may be an epoxy, a polyester, a vinyl ester or another suitable thermoplastic or duroplastic material. In other embodiments, the resin may be a thermosetting resin, such as epoxy, vinyl ester or polyester, or a thermoplastic resin, such as nylon, PVC, ABS, polypropylene or polyethylene.
a plurality of spacers or intermediate retaining inserts arranged between one or more of the root inserts, said retaining inserts each comprising a wedge-shaped section, and
In some embodiments wedge-shaped extension members are arranged in longitudinal, or axial extension of the root inserts, preferably tapering towards their distal end.

The fastening members of the root end insert are preferably adapted for incorporation within the root end of the shell part or shell half. In a preferred embodiment, the fastening members are bushings, preferably bushings with an inner thread. The bushings usually have a generally hollow cylindrical body. The fastening members are preferably accessible from the end of the wind turbine blade shell so that the fastening members in the final wind turbine blade can be used to mount the root end of the wind turbine blade to the hub of a wind turbine. The root end insert may further advantageously comprise a number of intermediate retaining inserts arranged between fastening members, said retaining inserts preferably comprising a wedge-shaped section for being arranged in between upper and lower fibre layers or plies of the shell part. Thereby, the fastening members and the retaining inserts may together form a root end insert that is embedded in the entire cross-section of the blade root end, thus forming a substantially circular insert in the finished wind turbine blade shell. The intermediate inserts and the fastening members preferably comprise lateral sides that abut each other.

According to an advantageous embodiment, the root end assembly further comprise wedge-shaped extension members arranged in longitudinal extension of the fastening members, tapering towards their distal end. The wedge-shaped extension member may for instance be made of foamed polymer or balsa-wood. The wedge-shaped extension member is preferably arranged such that it has the thickest part proximal to the end of the fastening member, and the thinnest part distal to the end of the fastening member. This ensures that the root end assembly has a gradual transition to the outer and inner fibre layers, in turn ensuring that the blade root does not have a steep or discontinuous stiffness transition.

The wedge-shaped extension members may thus provide for a gradual stiffness transition in the longitudinal direction of the finished wind turbine blade shell.

The present disclosure relates to a preform obtainable by the aforedescribed method of manufacturing a preform. Preferably, the preform comprises a top surface and an opposing bottom surface, wherein the bottom surface comprises a cavity with one or more chamfered portions. Said cavity with one or more chamfered portions is advantageously formed in the preform manufacturing method by use of the mould inlays(s) as discussed above. The top surface of the preform will usually face upwards in the preform mould, and the bottom surface of the preform will usually face downwards in the preform mould.

The present disclosure also relates to a blade part obtainable by the method of manufacturing a wind turbine blade part.

It will be understood that any of the embodiments and features described above in relation to the method of manufacturing a preform for a wind turbine blade likewise apply to the moulding assembly, to the method of manufacturing a blade part, and to the preform, as such, of the present invention, and vice versa.

As used herein, the term "wt%" means weight percent. The term "relative to the weight of the fibre material" means a percentage that is calculated by dividing the weight of an agent, such as a binding agent, by the weight of the fibre material. As an example, a value of 1 wt% relative to the weight of the fibre material corresponds to 10 g of binding agent per kilogram of fibre material.

As used herein, the term "longitudinal" means an axis or direction running substantially parallel to the maximum linear dimension of the element in question, for example a preform mould.

### Detailed description of the invention

The invention is explained in detail below with reference to embodiments shown in the drawings, in which
Fig. 1 shows a wind turbine,
Fig. 2 shows a schematic view of a wind turbine blade,
Fig. 3 shows a schematic view of an airfoil profile through section I-I of Fig. 4,
Fig. 4 shows a schematic view of the wind turbine blade, seen from above and from the side,
Fig. 5 is a perspective drawing of a preform mould,
Fig. 6 is a perspective drawing of another embodiment of a preform mould,
Fig. 7 is a perspective drawing of a blade mould for lay up of preforms according to the present invention,
Fig. 8 is partial perspective view of a blade mould for manufacturing a shell half of a wind turbine blade,
Figs. 9-11 are schematic perspective views of a preform mould for the perform manufacturing method of the present invention,
Fig. 12 is a cross section through the first mould inlay along the line a-a' in Fig. 10,
Fig. 13 is a cross section through the second mould inlay along the line b-b' in Fig. 10,
Fig. 14 is a cross section through the second mould inlay along the line c-c' in Fig. 10,
Figs. 15 and 16 are perspective views of a preform according to the present invention, and
Figs. 17-19 are schematic end views of a blade mould as seen from its root end.

### Detailed description

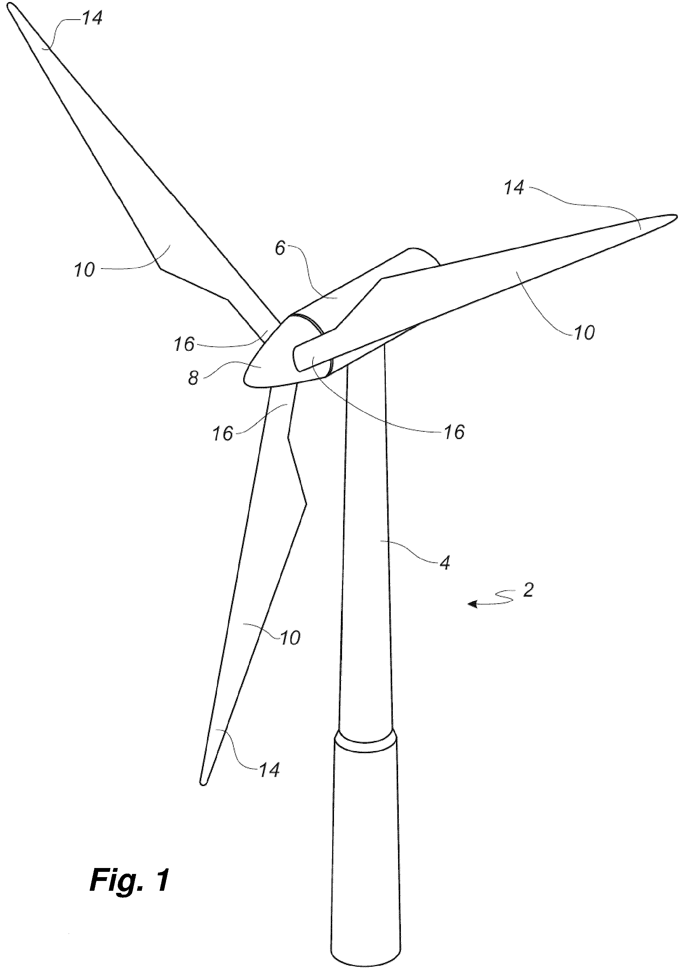

Fig. 1 illustrates a conventional modern upwind wind turbine according to the so-called "Danish concept" with a tower 4, a nacelle 6 and a rotor with a substantially horizontal rotor shaft. The rotor includes a hub 8 and three blades 10 extending radially from the hub 8, each having a blade root 16 nearest the hub and a blade tip 14 furthest from the hub 8.

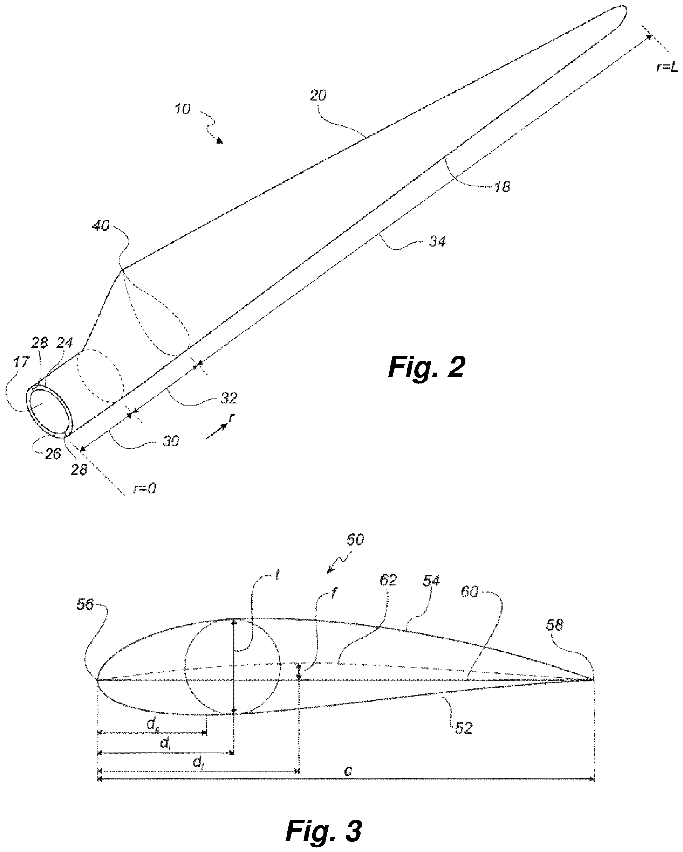

Fig. 2 shows a schematic view of an embodiment of a wind turbine blade 10 according to the invention. The wind turbine blade 10 has the shape of a conventional wind turbine blade and comprises a root region 30 closest to the hub, a profiled or an airfoil region 34 furthest away from the hub and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) has an ideal or almost ideal blade shape with respect to generating lift, whereas the root region 30 due to structural considerations has a substantially circular or elliptical cross-section, which for instance makes it easier and safer to mount the blade 10 to the hub. The diameter (or the chord) of the root region 30 may be constant along the entire root area 30. The transition region 32 has a transitional profile gradually changing from the circular or elliptical shape of the root region 30 to the airfoil profile of the airfoil region 34. The chord length of the transition region 32 typically increases with increasing distance *r* from the hub. The airfoil region 34 has an airfoil profile with a chord extending between the leading edge 18 and the trailing edge 20 of the blade 10. The width of the chord decreases with increasing distance *r* from the hub.

A shoulder 40 of the blade 10 is defined as the position, where the blade 10 has its largest chord length. The shoulder 40 is typically provided at the boundary between the transition region 32 and the airfoil region 34.

It should be noted that the chords of different sections of the blade normally do not lie in a common plane, since the blade may be twisted and/or curved (i.e. pre-bent), thus providing the chord plane with a correspondingly twisted and/or curved course, this being most often the case in order to compensate for the local velocity of the blade being dependent on the radius from the hub.

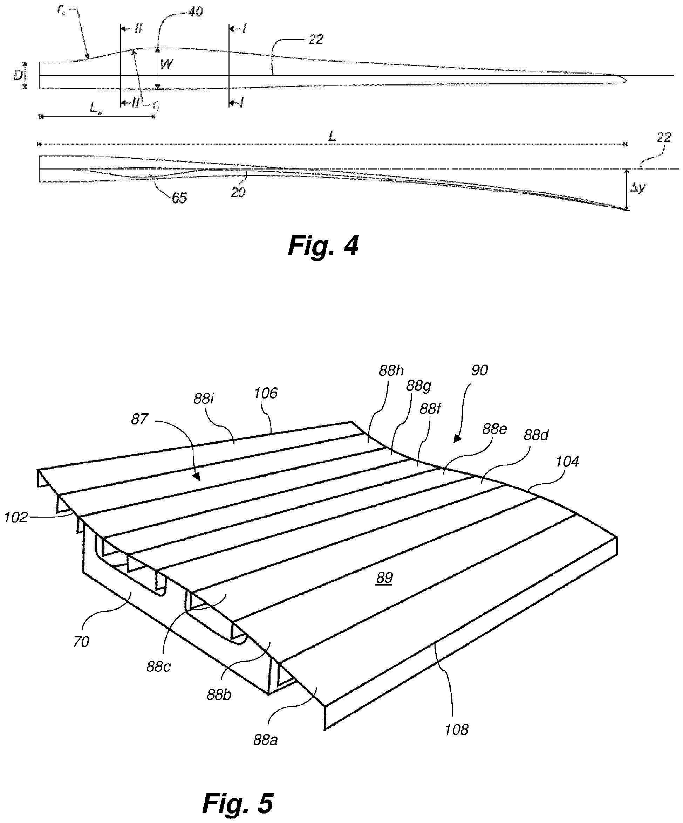

Figs. 3 and 4 depict parameters which are used to explain the geometry of the wind turbine blade according to the invention. Fig. 3 shows a schematic view of an airfoil profile 50 of a typical blade of a wind turbine depicted with the various parameters, which are typically used to define the geometrical shape of an airfoil. The airfoil profile 50 has a pressure side 52 and a suction side 54, which during use - i.e. during rotation of the rotor - normally face towards the windward (or upwind) side and the leeward (or downwind) side, respectively. The airfoil 50 has a chord 60 with a chord length c extending between a leading edge 56 and a trailing edge 58 of the blade. The airfoil 50 has a thickness t, which is defined as the distance between the pressure side 52 and the suction side 54. The thickness t of the airfoil varies along the chord 60. The deviation from a symmetrical profile is given by a camber line 62, which is a median line through the airfoil profile 50. The median line can be found by drawing inscribed circles from the leading edge 56 to the trailing edge 58. The median line follows the centres of these inscribed circles and the deviation or distance from the chord 60 is called the camber f. The asymmetry can also be defined by use of parameters called the upper camber (or suction side camber) and lower camber (or pressure side camber), which are defined as the distances from the chord 60 and the suction side 54 and pressure side 52, respectively.

Airfoil profiles are often characterised by the following parameters: the chord length c, the maximum camber f, the position *d_{f}* of the maximum camber f, the maximum airfoil thickness t, which is the largest diameter of the inscribed circles along the median camber line 62, the position *dₜ* of the maximum thickness *t,* and a nose radius (not shown). These parameters are typically defined as ratios to the chord length c. Thus, a local relative blade thickness *t*/*c* is given as the ratio between the local maximum thickness *t* and the local chord length c. Further, the position *dₚ* of the maximum pressure side camber may be used as a design parameter, and of course also the position of the maximum suction side camber.

Fig. 4 shows other geometric parameters of the blade. The blade has a total blade length *L*. As shown in Fig. 3, the root end is located at position *r =* 0, and the tip end located at *r = L.* The shoulder 40 of the blade is located at a position *r = L_{w},* and has a shoulder width *W,* which equals the chord length at the shoulder 40. The diameter of the root is defined as *D.* The curvature of the trailing edge of the blade in the transition region may be defined by two parameters, viz. a minimum outer curvature radius *rₒ* and a minimum inner curvature radius *rᵢ*, which are defined as the minimum curvature radius of the trailing edge, seen from the outside (or behind the trailing edge), and the minimum curvature radius, seen from the inside (or in front of the trailing edge), respectively. Further, the blade is provided with a prebend, which is defined as *Δy,* which corresponds to the out of plane deflection from a pitch axis 22 of the blade.

Fig. 5 is a schematic perspective drawing of a known preform mould 90. The preform mould 90 comprises a support element 70 and nine strip members 88a-i arranged on the support element 70. Each of the strip members 88a-i has a top surface 89. Together, the top surfaces of the respective strip members form a moulding surface 87 for moulding a preform for a rotor blade moulding process. The moulding surface 87 extends between a left edge 102, a right edge 104, a rear edge 106 and a front edge 108. Fig. 6 illustrates another embodiment of a preform mould 90 comprising a support element a plurality of strip members 88 arranged on the support element to form a moulding surface 87 for moulding a preform for a rotor blade moulding process. As seen in Fig. 6, the mould surface 87 is an elongate mould surface with a length which is more than five times its width.

As illustrated in Fig. 7, the manufactured preforms 98a, 98b, 98c can be laid up in a blade mould 96 to form part of a wind turbine blade, such as the root laminate. It is particularly preferred that the preforms manufactured according to the present invention are used for a blade section starting from the root end of the blade, such as the root region. The preforms 98a, 98b, 98c are arranged in the blade mould cavity 97, usually together with additional fibre material 94. Typically, the layup process also includes placing a core material 128, such as balsawood or foam, on top of, and/or underneath the fibre preforms. Then, resin is infused to the blade mould cavity 97, which is subsequently cured or hardened in order to form the blade part, such as a blade half.

Fig. 8 shows a known root end arrangement inserted at the root end during manufacturing of a wind turbine blade shell half 54. In the moulding process, typically an outer skin 136 is formed of one or more layers of fibre material, and then a root end assembly 130 is placed on top of the outer skin 136 at the root end of the blade mould 96. Then, an inner skin 138 formed of one or more layers of fibre material is placed on top of the root end assembly 130 and the outer skin 136. Typically, such root end assemblies comprise a plurality of root inserts 140 each comprising one or more bushings 142 for receiving bolts to fasten the blade to the turbine hub. The root inserts 140 or bushings 142 are usually spaced apart by spacers or retaining members 144 along the semi-circular path at the root end of the blade. Also, as seen in Fig. 8, such root end assemblies usually have a substantially wedge shaped part that tapers in a direction towards the tip end of the blade.

The preforms manufactured according to the method of the present invention are meant to address some the challenges with these known methods of manufacturing a wind turbine shell half, in particular concerning regions such as the wedge-shaped part of the root end assembly. The preforms of the present invention are particularly suitable for forming at least part of said inner skin 138 shown in Fig. 8.

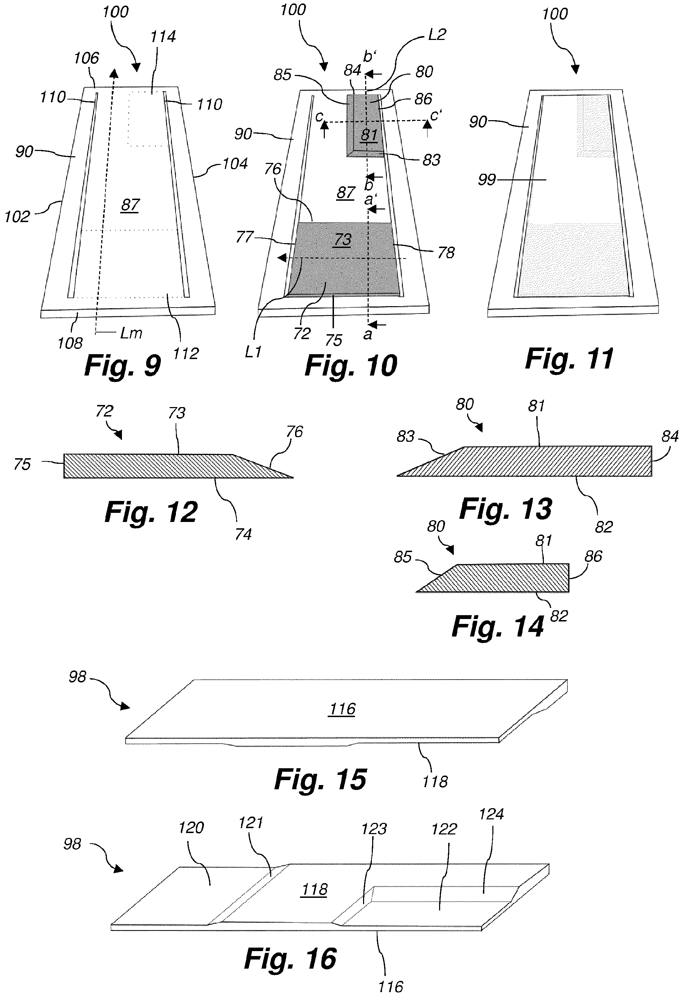

Figs. 9-11 illustrate a mould assembly 100 and a method of manufacturing a preform 98 for a wind turbine blade according to the present invention. The method comprises providing a preform mould 90 which has a mould surface 87. The mould surface comprises a front edge 108, a rear edge 106, and two lateral edges 102, 104 each extending between the front edge and the rear edge. The mould surface 87 for moulding the preform 98 may further be defined by vacuum profiles 110, which are used to apply negative pressure to the fibre material in the latter steps of the method. As seen in Fig. 10, a first mould inlay 72 is fastened to a first portion 112 of the mould surface, the first mould inlay 72 having an outer surface 73 and an inner surface 74. The inner surface of the first mould inlay 72 faces the first portion 112 of the mould surface. Said first portion 112 of the mould surface extends preferably along the front edge 108 of the mould surface. The longitudinal axis L1 of the first mould inlay 72 is substantially perpendicular to the longitudinal axis Lm of the mould surface, as seen in Fig. 10.

Similarly, a second mould inlay 80 is fastened to a second portion 114 of the mould surface, the second mould inlay 80 having an outer surface 81 and an inner surface 82, wherein the inner surface of the second mould inlay 80 faces the second portion of the mould surface. The longitudinal axis L2 of the second mould inlay 80 is substantially parallel to the longitudinal axis Lm of the mould surface. At least part of the perimeter of the first mould inlay 72 has a tapered edge 76. Also, at least part of the perimeter of the second mould inlay 80 has a tapered edge 83, 85. This is best seen in the cross sectional view of first mould inlay 72 in Fig. 12, taken along the line a-a' in Fig. 10, and in the cross sectional views of the second mould inlay in Figs. 13 and 14, taken along the lines b-b' and c-c' in Fig. 10. The first mould inlay 72 is spaced apart from the second mould inlay 80.

The perimeter of the first mould inlay 72 comprises a front edge 75, a rear edge 76, and two side edges 77, 78, wherein the rear edge 76 is a tapered edge; see Fig. 12. By contrast, the front edge 75 and the two side edges 77, 78 are substantially straight edges. The first mould inlay 72 of such shape is preferably used for providing preforms with a cavity in their lower surface for providing space for a root end assembly, as discussed above. As for second mould inlay 80, its perimeter comprises a front edge 83, a rear edge 84, and two side edges 85, 86, wherein the front edge 83 and one of the side edges 85 are tapered edges, wherein the rear edge and the other side edge are substantially straight edges. The cavity imparted to the preform by the second mould inlay is preferably used for accommodating a core material, as discussed above.

As seen in Fig. 11, subsequently a fibre material 99 and a binding agent is laid on the mould surface 87, on the first mould inlay 72, and on the second mould inlay 80. Preferably, a vacuum bag can be placed over the fibre lay up and over the vacuum profiles 110, subsequently applying negative pressure to the fibre material and binding agent for consolidating the fibre material. Finally heat is applied to the consolidated fibre material and binding agent to form the preform.

The resulting shape of the preform is illustrated in the perspective views of Fig. 15, as seen from the top, and in Fig. 16, as seen from the bottom. The preform 98 comprises a top surface 116 and an opposing bottom surface 118, wherein the bottom surface 118 comprises a first cavity 120 with chamfered portion 121, and a second cavity 122 with chamfered portions 123, 124. When being placed in the blade mould, the first cavity 120 of the preform 98 is preferably located above the root end assembly of the blade. The second cavity 122 is preferably located above a core material of the blade.

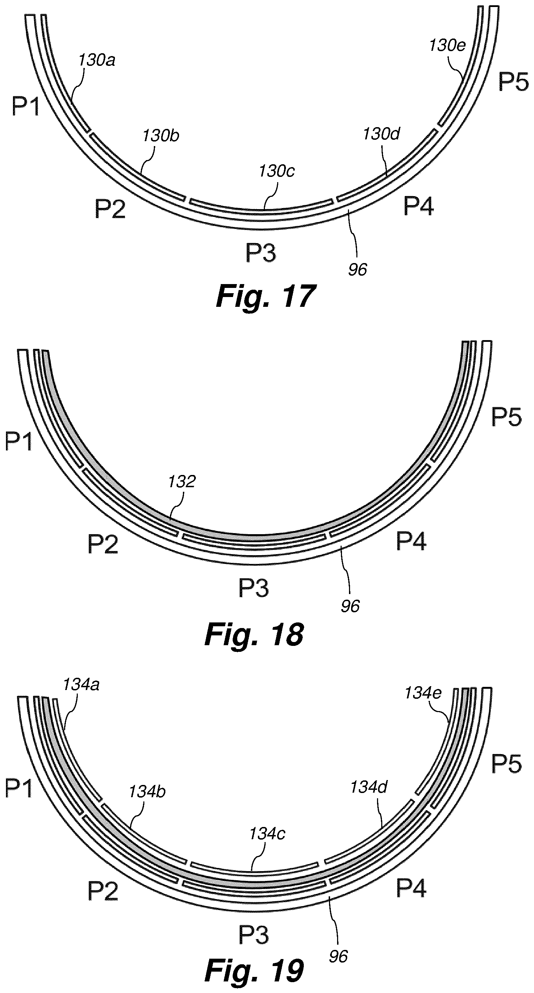

The method of manufacturing a shell part of a wind turbine blade of the present invention is further illustrated in the schematic end views of Figs. 17-19, which show a blade mould 96 as seen from the root end thereof. As seen in Fig. 17, a first set of preforms 130a-e are arranged at respective positions P1-P2 along the circumference of the semi-circular or oval root end of the blade mould. Then a root end assembly 132, preferably comprising a plurality of root inserts, is placed on top of at least part of the first set of preforms 130a-e, Fig. 18. The root end assembly preferably comprises a plurality of root inserts and/or a plurality of bushings configured to receive a root bolt, wherein the root inserts and/or bushings are arranged at the root end of the blade mould along a substantially semi-circular radial path, as seen in Figs. 8 and 18.

Subsequently, a second set of preforms 134 are placed on top of the root inserts and on top of the first set of preforms, further towards the tip end of the blade mould. The second set of preforms 134 comprises a plurality of preforms manufactured according to the method of the present invention, i.e. comprising one or more of the above-discussed cavities. Then a resin is infused into the blade mould 96, and the resin is cured in order to form the blade part, i.e. the shell half in the illustrated embodiment.

The invention is not limited to the embodiments described herein, and may be modified or adapted without departing from the scope of the present invention.

### List of reference numerals

- 2: wind turbine
- 4: tower
- 6: nacelle
- 8: hub
- 10: blade
- 14: blade tip
- 16: blade root
- 18: leading edge
- 20: trailing edge
- 22: pitch axis
- 30: root region
- 32: transition region
- 34: airfoil region
- 40: shoulder / position of maximum chord
- 50: airfoil profile
- 52: pressure side
- 54: suction side
- 56: leading edge
- 58: trailing edge
- 60: chord
- 62: camber line / median line
- 70: support element
- 72: first mould inlay
- 73: outer surface of first mould inlay
- 74: inner surface of first mould inlay
- 75: front edge of first mould inlay
- 76: rear edge of first mould inlay
- 77: first side edge of first mould inlay
- 78: second side edge of first mould inlay
- 80: second mould inlay
- 81: outer surface of second mould inlay
- 82: inner surface of second mould inlay
- 83: front edge of second mould inlay
- 84: rear edge of second mould inlay
- 85: first side edge of second mould inlay
- 86: second side edge of second mould inlay
- 87: mould surface of preform mould
- 88: strip member
- 89: top surface of strip member
- 90: preform mould
- 96: blade mould
- 97: blade mould cavity
- 98: preform
- 99: fibre material
- 100: mould assembly
- 102: left lateral edge of preform moulding surface
- 104: right lateral edge of preform moulding surface
- 106: rear edge of preform moulding surface
- 108: front edge of preform moulding surface
- 110: vacuum profiles
- 112: first portion of mould surface
- 114: second portion of mould surface
- 116: top surface of preform
- 118: bottom surface of preform
- 120: first cavity of preform
- 121: chamfered portion
- 122: second cavity of preform
- 123: chamfered portion
- 124: chamfered portion
- 126: fibre material
- 128: core material
- 130: first set of preforms
- 132: root end assembly
- 134: second set of preforms
- 136: outer skin
- 138: inner skin
- 140: root insert
- 142: bushing
- 144: spacer
- c: chord length
- *dₜ*: position of maximum thickness
- *d_{f}*: position of maximum camber
- *dₚ*: position of maximum pressure side camber
- *f*: camber
- *L*: blade length
- *L1*: longitudinal axis of first mould inlay
- *L2*: longitudinal axis of second mould inlay
- *Lm*: longitudinal axis of mould surface
- *r*: local radius, radial distance from blade root
- *t*: thickness
- Δ*y*: prebend

## Claims

1. A method of manufacturing a preform (98) for a wind turbine blade, the method comprising the steps of
providing a preform mould (90) comprising a mould surface (87),
fastening a first mould inlay (72) to a first portion (112) of the mould surface, the first mould inlay (72) having an outer surface (73) and an inner surface (74), wherein the inner surface of the first mould inlay (72) faces the first portion of the mould surface, and wherein at least part of the perimeter of the first mould inlay (72) has a tapered edge (76),
laying a fibre material (99) and a binding agent on the mould surface (87) and on the first mould inlay (72),
applying negative pressure to the fibre material and binding agent for consolidating the fibre material, and
applying heat to the consolidated fibre material and binding agent to form the preform.
wherein the method further comprises fastening a second mould inlay (80) to a second portion (114) of the mould surface, the second mould inlay (80) having an outer surface (81) and an inner surface (82), wherein the inner surface of the second mould inlay (80) faces the second portion of the mould surface, and wherein at least part of the perimeter of the second mould inlay (80) has a tapered edge (83, 85) wherein the laying step comprises laying a fibre material (99) and a binding agent on the mould surface (87), on the first mould inlay (72), and on the second mould inlay (80),
wherein the longitudinal axis (L1) of the first mould inlay (72) is substantially perpendicular to the longitudinal axis (Lm) of the mould surface, and wherein the longitudinal axis (L2) of the second mould inlay (80) is substantially parallel to the longitudinal axis (Lm) of the mould surface.

2. A method according to claim 1, wherein the first mould inlay (72) is spaced apart from the second mould inlay (80).

3. A method according to any of the preceding claims, wherein the mould surface comprises a front edge (108), a rear edge (106), and two lateral edges (102, 104) each extending between the front edge and the rear edge, wherein said first portion of the mould surface extends along the front edge (108) of the mould surface.

4. A method according to any of the preceding claims, wherein the first and/or the second mould inlay (72, 80) are substantially planar.

5. A method according to any of the preceding claims, wherein the perimeter of the first mould inlay (72) comprises a front edge (75), a rear edge (76), and two side edges (77, 78), wherein the rear edge is a tapered edge, preferably wherein the front edge and the two side edges are substantially straight edges.

6. A method according to any of claims 2-8, wherein the perimeter of the second mould inlay (80) comprises a front edge (83), a rear edge (84), and two side edges (85, 86), wherein the front edge and one of the side edges are tapered edges, preferably wherein the rear edge and the other side edge are substantially straight edges.

7. A method according to any of the preceding claims, wherein the first and/or second mould inlay (80) has a thickness of 20-100 mm, preferably 40-60 mm, tapering to less than 2 mm at the respective tapered edge.

8. A mould assembly for manufacturing a preform for a wind turbine blade according to any of claims 1-7, the mould assembly comprising
a preform mould (90) comprising a mould surface (87),
a first mould inlay (72) fastened to a first portion of the mould surface, the first mould inlay (72) having an outer surface and an inner surface, wherein the inner surface of the first mould inlay (72) faces the first portion of the mould surface, and wherein at least part of the perimeter of the first mould inlay (72) has a tapered edge, and
a second mould inlay (80) fastened to a second portion of the mould surface, the second mould inlay (80) having an outer surface and an inner surface, wherein the inner surface of the second mould inlay (80) faces the second portion of the mould surface, and wherein at least part of the perimeter of the second mould inlay (80) has a tapered edge,
wherein the longitudinal axis (L1) of the first mould inlay (72) is substantially perpendicular to the longitudinal axis (Lm) of the mould surface, and wherein the longitudinal axis (L2) of the second mould inlay (80) is substantially parallel to the longitudinal axis (Lm) of the mould surface.

9. A method of manufacturing a shell part of a wind turbine blade, the method comprising the steps of
providing a blade mould (96) comprising a moulding cavity (97),
arranging a first set of preforms (130) within the moulding cavity of the blade mould (96),
placing a root end assembly (132) on top of at least part of the first set of preforms,
arranging a second set of preforms (134) on top of the root end assembly (132) and the first set of preforms (130),
infusing a resin into the blade mould (96), and
curing or hardening the resin in order to form the blade part,
wherein the second set of preforms (134) comprises a plurality of preforms manufactured according to the method of any of claims 1-7.

10. A method according to claim 9, wherein each of the plurality of preforms comprises a top surface (116) and an opposing bottom surface (118), wherein the bottom surface (118) comprises a cavity (120, 122) with one or more chamfered portions (121, 123, 124).

11. A method according to claims 9 or 10, further comprising the steps of placing a core material (128) on top of at least part of the first set of preforms, and arranging the second set of preforms on top of the root end assembly, the core material and the first set of preforms.

12. A method according to any of claims 9-11, wherein the root end assembly (132) comprises a plurality of embedded bushings (142) arranged along a substantially semi-circular path, each bushing (142) configured to receive a root bolt, the root bolts configured to secure the root assembly to a hub of the wind turbine.

## Patentansprüche

1. Verfahren zum Herstellen eines Vorformlings (98) für einen Windkraftanlagenflügel, wobei das Verfahren die folgenden Schritte umfasst:
Bereitstellen eines Vorformling-Formwerkzeugs (90), das eine Formwerkzeugoberfläche (87) umfasst,
Befestigen einer ersten Formwerkzeugeinlage (72) an einem ersten Abschnitt (112) der Formwerkzeugoberfläche, wobei die erste Formwerkzeugeinlage (72) eine äußere Oberfläche (73) und eine innere Oberfläche (74) aufweist, wobei die innere Oberfläche der ersten Formwerkzeugeinlage (72) dem ersten Abschnitt der Formwerkzeugoberfläche zugewandt ist und wobei mindestens ein Teil des Umfangs der ersten Formwerkzeugeinlage (72) eine abgeschrägte Kante (76) aufweist,
Legen eines Fasermaterials (99) und eines Bindemittels auf die Formwerkzeugoberfläche (87) und auf die erste Formwerkzeugeinlage (72),
Aufbringen von Unterdruck auf das Fasermaterial und das Bindemittel zum Verfestigen des Fasermaterials, und
Aufbringen von Wärme auf das verfestigte Fasermaterial und Bindemittel, um den Vorformling zu bilden,
wobei das Verfahren ferner das Befestigen einer zweiten Formwerkzeugeinlage (80) an einem zweiten Abschnitt (114) der Formwerkzeugoberfläche umfasst, wobei die zweite Formwerkzeugeinlage (80) eine äußere Oberfläche (81) und eine innere Oberfläche (82) aufweist, wobei die innere Oberfläche der zweiten Formwerkzeugeinlage (80) dem zweiten Abschnitt der Formwerkzeugoberfläche zugewandt ist und wobei mindestens ein Teil des Umfangs der zweiten Formwerkzeugeinlage (80) eine abgeschrägte Kante (83, 85) aufweist, wobei der Legeschritt das Legen eines Fasermaterials (99) und eines Bindemittels auf die Formwerkzeugoberfläche (87), auf die erste Formwerkzeugeinlage (72) und auf die zweite Formwerkzeugeinlage (80) umfasst,
wobei die Längsachse (L1) der ersten Formwerkzeugeinlage (72) im Wesentlichen senkrecht zu der Längsachse (Lm) der Formwerkzeugoberfläche ist und wobei die Längsachse (L2) der zweiten Formwerkzeugeinlage (80) im Wesentlichen parallel zu der Längsachse (Lm) der Formwerkzeugoberfläche ist.

2. Verfahren nach Anspruch 1, wobei die erste Formwerkzeugeinlage (72) von der zweiten Formwerkzeugeinlage (80) beabstandet ist.

3. Verfahren nach einem der vorangehenden Ansprüche, wobei die Formwerkzeugoberfläche eine vordere Kante (108), eine hintere Kante (106) und zwei seitliche Kanten (102, 104), die sich jeweils zwischen der vorderen Kante und der hinteren Kante erstrecken, umfasst, wobei sich der erste Abschnitt der Formwerkzeugoberfläche entlang der vordere Kante (108) der Formwerkzeugoberfläche erstreckt.

4. Verfahren nach einem der vorangehenden Ansprüche, wobei die erste und/oder die zweite Formwerkzeugeinlage (72, 80) im Wesentlichen ebenflächig sind.

5. Verfahren nach einem der vorangehenden Ansprüche, wobei der Umfang der ersten Formwerkzeugeinlage (72) eine vordere Kante (75), eine hintere Kante (76), und zwei Seitenkanten (77, 78) umfasst, wobei die hintere Kante eine abgeschrägte Kante ist, wobei vorzugsweise die vordere Kante und die zwei Seitenkanten im Wesentlichen gerade Kanten sind.

6. Verfahren nach einem der Ansprüche 2-8, wobei der Umfang der zweiten Formwerkzeugeinlage (80) eine vordere Kante (83), eine hintere Kante (84), und zwei Seitenkanten (85, 86) umfasst, wobei die vordere Kante und eine der Seitenkanten abgeschrägte Kanten sind, wobei vorzugsweise die hintere Kante und die andere Seitenkante im Wesentlichen gerade Kanten sind.

7. Verfahren nach einem der vorangehenden Ansprüche, wobei die erste und/oder die zweite Formwerkzeugeinlage (80) eine Dicke von 20-100 mm aufweist, vorzugsweise 40-60 mm, die an der jeweiligen abgeschrägten Kante auf weniger als 2 mm abnimmt.

8. Formwerkzeuganordnung zum Herstellen eines Vorformlings für einen Windkraftanlagenflügel nach einem der Ansprüche 1-7 wobei die Formwerkzeuganordnung Folgendes umfasst:
ein Vorformling-Formwerkzeug (90), das eine Formwerkzeugoberfläche (87) umfasst,
eine erste Formwerkzeugeinlage (72), die an einem ersten Abschnitt der Formwerkzeugoberfläche befestigt ist, wobei die erste Formwerkzeugeinlage (72) eine äußere Oberfläche und eine innere Oberfläche aufweist, wobei die innere Oberfläche der ersten Formwerkzeugeinlage (72) dem ersten Abschnitt der Formwerkzeugoberfläche zugewandt ist und wobei mindestens ein Teil des Umfangs der ersten Formwerkzeugeinlage (72) eine abgeschrägte Kante (76) aufweist, und
eine zweite Formwerkzeugeinlage (80), die an einem zweiten Abschnitt der Formwerkzeugoberfläche befestigt ist, wobei die zweite Formwerkzeugeinlage (80) eine äußere Oberfläche und eine innere Oberfläche aufweist, wobei die innere Oberfläche der zweiten Formwerkzeugeinlage (80) dem zweiten Abschnitt der Formwerkzeugoberfläche zugewandt ist und wobei mindestens ein Teil des Umfangs der zweiten Formwerkzeugeinlage (80) eine abgeschrägte Kante aufweist,
wobei die Längsachse (L1) der ersten Formwerkzeugeinlage (72) im Wesentlichen senkrecht zu der Längsachse (Lm) der Formwerkzeugoberfläche ist und wobei die Längsachse (L2) der zweiten Formwerkzeugeinlage (80) im Wesentlichen parallel zu der Längsachse (Lm) der Formwerkzeugoberfläche ist.

9. Verfahren zum Herstellen eines Schalenteils eines Windkraftanlagenflügels, wobei das Verfahren die folgenden Schritte umfasst:
Bereitstellen eines Flügelformwerkzeugs (96), das eine Formungshöhlung (97) umfasst,
Anordnen eines ersten Satzes von Vorformlingen (130) in der Formungshöhlung des Flügelformwerkzeugs (96),
Platzieren einer Wurzelendeanordnung (132) auf mindestens einen Teil des ersten Satzes von Vorformlingen,
Anordnen eines zweiten Satzes von Vorformlingen (134) auf der Wurzelendeanordnung (132) und dem ersten Satz von Vorformlingen (130),
Infundieren eines Harzes in das Flügelformwerkzeug (96), und
Abbinden oder Härten des Harzes, um den Flügelteil zu bilden,
wobei der zweite Satz von Vorformlingen (134) eine Vielzahl von gemäß dem Verfahren nach einem der Ansprüche 1-7 hergestellten Vorformlingen umfasst.

10. Verfahren nach Anspruch 9, wobei jeder der Vielzahl von Vorformlingen eine obere Oberfläche (116) und eine gegenüberliegende untere Oberfläche (118) umfasst, wobei die untere Oberfläche (118) eine Höhlung (120, 122) mit einem oder mehreren abgefasten Abschnitten (121, 123, 124) umfasst.

11. Verfahren nach Anspruch 9 oder 10, ferner umfassend die Schritte des Platzierens eines Kernmaterials (128) auf mindestens einen Teil des ersten Satzes von Vorformlingen und des Anordnens des zweiten Satzes von Vorformlingen auf die Wurzelendeanordnung, das Kernmaterial und den ersten Satz von Vorformlingen.

12. Verfahren nach einem der Ansprüche 9-11, wobei die Wurzelendeanordnung (132) eine Vielzahl von eingebetteten Buchsen (142) umfasst, die entlang einer im Wesentlichen halbkreisförmigen Bahn angeordnet sind, wobei die Buchsen (142) jeweils dazu angeordnet sind, eine Wurzelschraube aufzunehmen, wobei die Wurzelschrauben dazu konfiguriert sind, die Wurzelanordnung an einer Nabe der Windkraftanlage zu fixieren.

## Revendications

1. Procédé de fabrication d'une préforme (98) pour une pale d'éolienne, le procédé comportant les étapes consistant à
mettre en œuvre un moule de préforme (90) comportant une surface de moule (87),
fixer un premier insert de moule (72) sur une première partie (112) de la surface de moule, le premier insert de moule (72) ayant une surface extérieure (73) et une surface intérieure (74), dans lequel la surface intérieure du premier insert de moule (72) est orientée vers la première partie de la surface de moule, et dans lequel au moins une partie du périmètre du premier insert de moule (72) présente un bord biseauté (76),
poser un matériau fibreux (99) et un agent liant sur la surface de moule (87) et sur le premier insert de moule (72),
appliquer une pression négative sur le matériau fibreux et l'agent liant pour consolider le matériau fibreux, et
appliquer de la chaleur sur le matériau fibreux consolidé et l'agent liant pour former la préforme,
dans lequel le procédé comporte par ailleurs l'étape consistant à fixer un deuxième insert de moule (80) sur une deuxième partie (114) de la surface de moule, le deuxième insert de moule (80) ayant une surface extérieure (81) et une surface intérieure (82), dans lequel la surface intérieure du deuxième insert de moule (80) est orientée vers la deuxième partie de la surface de moule, et dans lequel au moins une partie du périmètre du deuxième insert de moule (80) présente un bord biseauté (83, 85), dans lequel l'étape consistant à poser comporte l'étape consistant à poser un matériau fibreux (99) et un agent liant sur la surface de moule (87), sur le premier insert de moule (72) et sur le deuxième insert de moule (80), dans lequel l'axe longitudinal (L1) du premier insert de moule (72) est sensiblement perpendiculaire par rapport à l'axe longitudinal (Lm) de la surface de moule, et dans lequel l'axe longitudinal (L2) du deuxième insert de moule (80) est sensiblement parallèle par rapport à l'axe longitudinal (Lm) de la surface de moule.

2. Procédé selon la revendication 1, dans lequel le premier insert de moule (72) est espacé par rapport au deuxième insert de moule (80).

3. Procédé selon l'une quelconque des revendications précédentes, dans lequel la surface de moule comporte un bord avant (108), un bord arrière (106) et deux bords latéraux (102, 104) s'étendant chacun entre le bord avant et le bord arrière, dans lequel ladite première partie de la surface de moule s'étend le long du bord avant (108) de la surface de moule.

4. Procédé selon l'une quelconque des revendications précédentes, dans lequel le premier insert de moule et/ou le deuxième insert de moule (72, 80) sont sensiblement plans.

5. Procédé selon l'une quelconque des revendications précédentes, dans lequel le périmètre du premier insert de moule (72) comporte un bord avant (75), un bord arrière (76) et deux bords latéraux (77, 78), dans lequel le bord arrière est un bord biseauté, de préférence dans lequel le bord avant et les deux bords latéraux sont des bords sensiblement droits.

6. Procédé selon l'une quelconque des revendications 2 à 8, dans lequel le périmètre du deuxième insert de moule (80) comporte un bord avant (83), un bord arrière (84) et deux bords latéraux (85, 86), dans lequel le bord avant et l'un des bords latéraux sont des bords biseautés, de préférence dans lequel le bord arrière et l'autre bord latéral sont des bords sensiblement droits.

7. Procédé selon l'une quelconque des revendications précédentes, dans lequel le premier et/ou deuxième insert de moule (80) a une épaisseur allant de 20 à 100 mm, de préférence de 40 à 60 mm, allant en s'effilant jusqu'à moins de 2 mm au niveau du bord biseauté respectif.

8. Ensemble formant moule servant à fabriquer une préforme pour une pale d'éolienne selon l'une quelconque des revendications 1 à 7, l'ensemble formant moule comportant
un moule de préforme (90) comportant une surface de moule (87),
un premier insert de moule (72) fixé sur une première partie de la surface de moule, le premier insert de moule (72) ayant une surface extérieure et une surface intérieure, dans lequel la surface intérieure du premier insert de moule (72) est orientée vers la première partie de la surface de moule, et dans lequel au moins une partie du périmètre du premier insert de moule (72) présente un bord biseauté, et
un deuxième insert de moule (80) fixé sur une deuxième partie de la surface de moule, le deuxième insert de moule (80) ayant une surface extérieure et une surface intérieure, dans lequel la surface intérieure du deuxième insert de moule (80) est orientée vers la deuxième partie de la surface de moule, et dans lequel au moins une partie du périmètre du deuxième insert de moule (80) présente un bord biseauté,
dans lequel l'axe longitudinal (L1) du premier insert de moule (72) est sensiblement perpendiculaire par rapport à l'axe longitudinal (Lm) de la surface de moule, et dans lequel l'axe longitudinal (L2) du deuxième insert de moule (80) est sensiblement parallèle par rapport à l'axe longitudinal (Lm) de la surface de moule.

9. Procédé de fabrication d'une partie formant coque d'une pale d'éolienne, le procédé comportant les étapes consistant à
mettre en œuvre un moule de pale (96) comportant une cavité de moulage (97),
agencer un premier ensemble de préformes (130) à l'intérieur de la cavité de moulage du moule de pale (96),
placer un ensemble formant extrémité de pied (132) par-dessus au moins une partie du premier ensemble de préformes,
agencer un deuxième ensemble de préformes (134) par-dessus l'ensemble formant extrémité de pied (132) et le premier ensemble de préformes (130),
infuser une résine jusque dans le moule de pale (96), et
faire sécher ou faire durcir la résine afin de former la partie formant pale,
dans lequel le deuxième ensemble de préformes (134) comporte une pluralité de préformes fabriquées d'après le procédé selon l'une quelconque des revendications 1 à 7.

10. Procédé selon la revendication 9, dans lequel chacune de la pluralité de préformes comporte une surface supérieure (116) et une surface inférieure (118) opposée, dans lequel la surface inférieure (118) comporte une cavité (120, 122) avec une ou plusieurs parties chanfreinées (121, 123, 124).

11. Procédé selon la revendication 9 ou la revendication 10, comportant par ailleurs les étapes consistant à placer un matériau de noyau (128) par-dessus au moins une partie du premier ensemble de préformes, et à agencer le deuxième ensemble de préformes par-dessus l'ensemble formant extrémité de pied, le matériau de noyau et le premier ensemble de préformes.

12. Procédé selon l'une quelconque des revendications 9 à 11, dans lequel l'ensemble formant extrémité de pied (132) comporte une pluralité de douilles encastrées (142) agencées le long d'un trajet sensiblement semi-circulaire, chaque douille (142) étant configurée pour recevoir un boulon de pied, les boulons de pied étant configurés pour assujettir l'ensemble formant pied à un moyeu de l'éolienne.
